# EUROPÄISCHE PATENTSCHRIFT

(11) **EP 3 927 580 B1**
(45) Veröffentlichungstag und Bekanntmachung des Hinweises auf die Patenterteilung: **21.06.2023**
(21) Anmeldenummer: 20700401.1
(22) Anmeldetag: 15.01.2020
(51) Int. Cl.: B60Q 1/076

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 21.02.2019 EP 19158454
(43) Veröffentlichungstag der Anmeldung: 29.12.2021
(73) Patentinhaber: ZKW Group GmbH, 3250 Wieselburg (AT)
(72) Erfinder: STADLER, Peter, 3654 Raxendorf (AT); AICHINGER, Tobias, 3243 St. Leonhard am Forst (AT); GOTTSMANN, Michael, 3652 Leiben (AT); PFLÜGL, Hubert, 3270 Scheibbs (AT); GUTMENSCH, Maximilian, 3254 Bergland (AT)
(74) Vertreter: Patentanwaltskanzlei Matschnig & Forsthuber OG
(86) Internationale Anmeldenummer: PCT/EP2020/050902
(87) Internationale Veröffentlichungsnummer: WO 2020/169275

(56) Entgegenhaltungen:
- EP-A1- 2 803 528
- EP-A1- 2 995 500
- EP-A1- 3 127 746
- EP-A2- 2 719 579
- WO-A1-2018/041373

## Beschreibung

Die Erfindung betrifft eine Beleuchtungsvorrichtung für einen Kraftfahrzeugscheinwerfer, welche Beleuchtungsvorrichtung Folgendes umfasst:
- eine erste optische Baueinheit, welche um eine erste Verschwenkachse verschwenkbar gelagert ist,
- eine zweite optische Baueinheit, welche um eine zweite Verschwenkachse verschwenkbar gelagert ist, wobei die erste und die zweite Verschwenkachse parallel zueinander verlaufen, und
- zumindest eine Einstelleinrichtung zum gleichzeitigen Verschwenken der ersten und der zweiten optischen Baueinheit um deren Verschwenkachsen, welche Einstelleinrichtung ein Kopplungselement und eine Antriebseinrichtung mit einem in eine Verschubachse linear verstellbaren Stellarm umfasst, wobei die Verschubachse orthogonal zur ersten und zweiten Verschwenkachse ist, und wobei das Kopplungselement über eine erste Verbindungsstelle gelenkig mit der ersten optischen Baueinheit und über eine zweite Verbindungsstelle gelenkig mit der zweiten optischen Baueinheit verbunden ist, und wobei der Stellarm der Antriebseinrichtung mit dem Kopplungselement an einer dritten Verbindungsstelle beweglich verbunden ist und das Kopplungselement in Richtung der Verschubachse antreibt.

Weiters betrifft die Erfindung einen Kraftfahrzeugscheinwerfer mit zumindest einer erfindungsgemäßen Beleuchtungsvorrichtung.

In Kraftfahrzeugscheinwerfern sind meistens verschiedene Lichtfunktionen auf beispielsweise verschiedenen Tragerahmen angeordnet, da der meist vorgegebene Bauraum durch entsprechende Scheinwerferdesigns vorgegeben ist. Bei einer Leuchtweitenregelung wird üblicherweise angestrebt, dass sich beide Tragerahmen bzw. die unterschiedlichen optischen Baueinheiten gemeinsam bewegen bzw. verschwenken, wobei die optischen Baueinheiten mittels einem Kopplungselements miteinander mechanisch verbunden sind. Bei einer solchen Verstellung mittels der oben genannten Koppelung wird eine möglichst leichtgängige Verstellmechanik angestrebt, welche auch anfallende Vibrationen aushalten und nicht verkippen sollte.

Um diese Anforderungen erfüllen zu können, ist unter anderem der Einstellhebel, also der Abstand zwischen der Verschwenkachse und dem entsprechenden Angriffspunkt zur Verschwenkung der optischen Baueinheit, so groß wie möglich zu gestalten, was jedoch aufgrund des oben bereits erwähnten vorgegebenen Bauraums bzw. des Scheinwerferdesigns nicht immer möglich ist, sodass Kompromisse eingegangen werden müssen.

Die EP 3 127 746 A1, die EP 2 803 528 A1, die EP 2 995 500 A1 sowie die WO 2018/041373 zeigen Beleuchtungsvorrichtungen aus dem Stand der Technik.

Es ist eine Aufgabe der Erfindung, eine verbesserte Beleuchtungsvorrichtung für einen Kraftfahrzeugscheinwerfer bereitzustellen.

Diese Aufgabe wird dadurch gelöst, durch die Merkmale des Anspruchs 1.

Dadurch kann der Bauraumbedarf gegenüber bisher bekannten Lösungen verringert werden bzw. variabler gestaltet werden. Dies ist insbesondere bei aktuellen Scheinwerfern von Vorteil, da durch immer höhere Anforderungen von Seiten des Fahrzeugdesigns, umgebender Technik und Funktionen sowie zusätzlicher Technik im Scheinwerfer der vorhandene Bauraum immer besser genutzt werden muss.

Auf Führungen im Gehäuse, wie sie bei bekannten Lösungen für das Kopplungselement teilweise notwendig sind, kann bei der erfindungsgemäßen Lösung verzichtet werden. Somit verringert sich auch der Aufwand bei der genauen Bauteil- und Materialabstimmung und damit einhergehende Probleme können vermieden werden.

Vorzugsweise ist die Antriebseinrichtung dazu eingerichtet, das längliche Kopplungselement in Richtung seiner Längserstreckung linear hin- und her zu bewegen bzw. zu verschieben. Diese Verschiebebewegung wird, da das Kopplungselement außerhalb der beiden im Wesentlichen zueinander parallelen ersten und zweiten Verschwenkachsen der optischen Baueinheiten liegt, in eine Verschwenkbewegung der beiden optischen Baueinheiten um deren Verschwenkachsen umgesetzt. Das Kopplungselement erfährt dabei eine, wenn auch in der Regel geringe Verschiebung normal zu seiner Längserstreckung, da die Verbindungsstellen der optischen Baueinheiten mit dem Kopplungselement einen Kreisbogen um die Verschwenkachsen der optischen Baueinheiten beschreiben.

Damit eine entsprechende Relativbewegung des Kopplungselementes zu der zumindest einen Antriebseinrichtung möglich ist, kann daher mit Vorteil vorgesehen sein, dass die zumindest eine Antriebseinrichtung über eine Antriebseinrichtungs-Verbindungsstelle beweglich mit dem Kopplungselement verbunden ist.

Bei einer konkreten Realisierung der Erfindung kann vorgesehen sein, dass die beiden im Wesentlichen zueinander parallelen Achsen Horizontalachsen sind, welche vorzugsweise im Wesentlichen normal auf die optischen Achsen der optischen Baueinheiten stehen.

Um diese Horizontalachsen können die optischen Baueinheiten auf und ab verschwenkt werden und so die Leuchtweite des jeweils mit der optischen Baueinheit erzeugten Lichtbündels eingestellt werden.

Es sei angemerkt, dass sich Begriffe wie "horizontal", "vertikal", "oben" oder "unten" auf eine in einen Kraftfahrzeugscheinwerfer korrekt eingebaute Beleuchtungseinrichtung beziehen, welcher Kraftfahrzeugscheinwerfer sich in Einbaulage in einem Kraftfahrzeug befindet.

Um den weiter oben beschriebenen Versatz des länglichen Kopplungselementes (in Folge der Kreisbewegung der Verbindungsstellen) zu ermöglichen, sind die Verbindungsstellen derart ausgebildet, dass das Kopplungselement in Bezug auf die der Verbindungsstelle zugeordnete optische Baueinheit und des Stellarms um eine Achse, welche parallel zu der Verschwenkachse der optischen Baueinheit verläuft, verschwenkbar ist.

Grundsätzlich kann die Antriebseinrichtung zum gleichzeitigen Verschwenken der beiden optischen Baueinheiten um ihre parallelen Achsen eine manuell zu bedienende Antriebseinrichtung sein. Für eine automatische Einstellung kann es aber von Vorteil sein, wenn die Antriebsvorrichtung ein Linearantrieb, insbesondere ein Linearmotor, vorzugsweise ein elektrischer Linearmotor, ist.

In einer zweckmäßigen Ausführungsform der Erfindung kann vorgesehen sein, dass der Normalabstand der dritten Verbindungsstelle zur Horizontalebene kleiner ist als der Normalabstand der ersten Verbindungsstelle zur Horizontalebene.

Es kann vorgesehen sein, dass die Verschubachse parallel zur Horizontalebene ist.

Erfindungsgemäß ist das Kopplungselement als längliches Kopplungselement mit einer Längsachse ausgebildet, wobei die Längsachse des Kopplungselements durch die erste und zweite Verbindungsstellen verläuft und parallel zur Verschubachse ist.

Es kann ferner vorgesehen sein, dass das Kopplungselement starr ausgebildet ist.

Es kann vorgesehen sein, dass die dritte Verbindungsstelle, welche den Stellarm der Antriebseinrichtung mit dem Kopplungselement verbindet, an einem Ende des Kopplungselements angeordnet ist.

Ferner kann vorgesehen sein, dass die erste oder die zweite Verbindungsstelle an einem Ende des Kopplungselements, insbesondere an dem der dritten Verbindungsstelle gegenüberliegenden Ende des Kopplungselements angeordnet ist.

Erfindungsgemäß ist der Normalabstand der ersten Verbindungsstelle zu der ersten Verschwenkachse der ersten optischen Baueinheit identisch zum Normalabstand der zweiten Verbindungsstelle zu der zweiten Verschwenkachse der zweiten optischen Baueinheit sein.

Dadurch werden beide optischen Baueinheiten beim Verschwenken um ihre parallelen Verschwenkachsen um den gleichen Winkelbetrag verschwenkt.

Es kann vorgesehen sein, dass die erste und/oder die zweite Verbindungsstelle als Kugelgelenk bzw. kugelgelenksartig ausgebildet ist.

Es kann vorgesehen sein, dass die erste und die zweite Verschwenkachse in einer gemeinsamen Horizontalebene liegen.

Überdies kann vorgesehen sein, dass die optischen Baueinheiten Linsen, Reflektoren oder Lichtmodule sind.

Es kann vorgesehen sein, dass die optischen Baueinheiten jeweils einen Tragerahmen aufweisen, an welchem die entsprechenden Verbindungsstellen angeordnet sind.

Es kann überdies vorgesehen sein, dass eine und/oder beide optischen Baueinheiten mehrere Lichtmodule umfassen, welche je optischer Baueinheit auf einem Tragerahmen angeordnet sind.

Mit Vorteil kann vorgesehen sein, wenn die dritte Verbindungsstelle ein zumindest teilweises vertikales Verschieben des Kopplungselements an dem Stellarm zulässt.

Die Aufgabe wird auch erfindungsgemäß mit einem Kraftfahrzeugscheinwerfer, welcher zumindest eine erfindungsgemäße Beleuchtungseinrichtung umfasst, gelöst.

Nachfolgend wird die Erfindung anhand von beispielhaften Zeichnungen näher erläutert. Hierbei zeigt
Fig. 1 eine beispielhafte Beleuchtungsvorrichtung in einem Kraftfahrzeugscheinwerfergehäuse in einer perspektivischen Ansicht,
Fig. 2 die Beleuchtungsvorrichtung aus Fig. 1 in einer Seitenansicht.

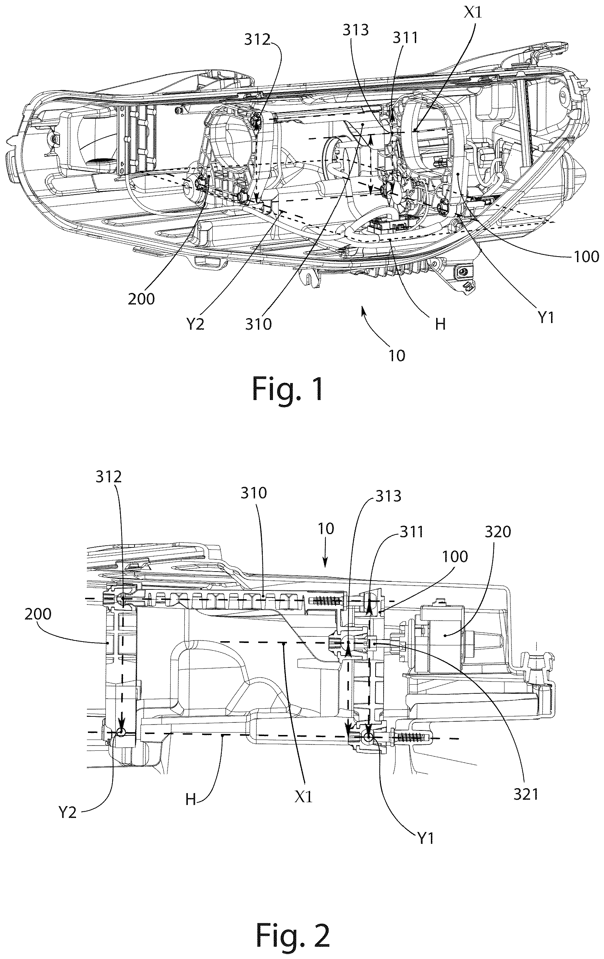

**Fig. 1** zeigt eine beispielhafte Beleuchtungsvorrichtung **10** für einen Kraftfahrzeugscheinwerfer, welche Beleuchtungsvorrichtung **10** eine erste optische Baueinheit **100,** welche um eine erste Verschwenkachse **Y1** verschwenkbar gelagert ist, und eine zweite optische Baueinheit **200,** welche um eine zweite Verschwenkachse **Y2** verschwenkbar gelagert ist, wobei die erste und die zweite Verschwenkachse **Y1, Y2** parallel zueinander verlaufen.

Die optischen Baueinheiten **100, 200** können beispielsweise Linsen, Reflektoren oder ganze Lichtmodule sein, wobei die optischen Baueinheiten **100, 200** jeweils einen Tragerahmen aufweisen, an welchem die Lichtmodule angeordnet bzw. befestigt sind. In dem in den Figuren gezeigten Beispiel sind aus Gründen der Übersichtlichkeit lediglich die Tragerahmen der optischen Baueinheiten **100, 200** gezeigt, wobei nachfolgend weiterhin der Terminus "optische Baueinheiten" verwendet wird.

Ferner umfasst die Beleuchtungsvorrichtung **10** eine Einstelleinrichtung zum gleichzeitigen Verschwenken der ersten und der zweiten optischen Baueinheit **100, 200** um deren Verschwenkachsen **Y1, Y2,** welche Einstelleinrichtung ein Kopplungselement **310** und eine Antriebseinrichtung **320** mit einem in eine Verschubachse **X1** linear verstellbaren Stellarm **321** aufweist.

Die Verschubachse **X1** ist dabei orthogonal zur ersten und zweiten Verschwenkachse **Y1, Y2** angeordnet, wobei das Kopplungselement **310** über eine erste Verbindungsstelle **311** gelenkig mit der ersten optischen Baueinheit **100** und über eine zweite Verbindungsstelle **312** gelenkig mit der zweiten optischen Baueinheit **200** verbunden ist, und wobei der Stellarm **321** der Antriebseinrichtung **320** mit dem Kopplungselement **310** an einer dritten Verbindungsstelle **313** beweglich verbunden ist und das Kopplungselement **310** in Richtung der Verschubachse **X1** antreibt.

Die erste und die zweite Verbindungsstelle **311, 312** sind jeweils an entgegengesetzten Enden des Kopplungselements **310** angeordnet, wobei die dritte Verbindungsstelle **313,** welche den Stellarm **312** der Antriebseinrichtung **320** mit dem Kopplungselement **310** verbindet, an dem Ende angeordnet ist, an welchem die erste Verbindungsstelle **311** angeordnet ist, wobei die Verbindungsstellen **311, 312, 313** jeweils kugelgelenksartig ausgeführt sind.

Das Kopplungselement **310** ist hierbei länglich und als starrer Körper ausgebildet, wobei die Längsachse des Kopplungselements **310** parallel zur Verschubachse **X1** angeordnet ist.

Wie in **Fig. 1** und auch **Fig. 2** zu sehen ist, liegt die erste Verschwenkachse **Y1** in einer gedachten Horizontalebene **H,** wobei der Normalabstand der dritten Verbindungsstelle **313** zu dieser Horizontalebene **H** kleiner ist als der Normalabstand der ersten Verbindungsstelle **311** zur Horizontalebene **H.** Weiters ist die Verschubachse **X1** parallel zur Horizontalebene **H.**

In **Fig. 2** ist weiters zu sehen, dass der Normalabstand der ersten Verbindungsstelle **311** zu der ersten Verschwenkachse **Y1** der ersten optischen Baueinheit **100** identisch zum Normalabstand der zweiten Verbindungsstelle **312** zu der zweiten Verschwenkachse **Y2** der zweiten optischen Baueinheit **200** ist. Weiters liegen die erste und die zweite Verschwenkachse **Y1, Y2** in dem gezeigten Beispiel in einer gemeinsamen Horizontalebene **H.**

**Fig. 2** zeigt ferner eine Ausgangslage der optischen Baueinheiten **100, 200,** wobei die Antriebseinrichtung **320** dazu eingerichtet, das längliche Kopplungselement **310** in Richtung seiner Längserstreckung bzw. in Richtung der Verschubachse **X1** linear hin- und her zu bewegen bzw. zu verschieben. Diese Verschiebebewegung wird, da das Kopplungselement **310** zwischen den beiden zueinander parallelen ersten und zweiten Verschwenkachsen **Y1, Y2** der optischen Baueinheiten **100, 200** liegt, in eine Verschwenkbewegung der beiden optischen Baueinheiten um deren Verschwenkachsen **Y1, Y2** umgesetzt. Das Kopplungselement **310** erfährt dabei selbst eine, wenn auch in der Regel geringe Verschiebung normal zu seiner Längserstreckung, da die Verbindungsstellen **311, 312** der optischen Baueinheiten **100, 200** mit dem Kopplungselement **310** einen Kreisbogen um die Verschwenkachsen **Y1, Y2** der optischen Baueinheiten **100, 200** beschreiben.

Damit eine entsprechende Relativbewegung des Kopplungselementes **310** zu der zumindest einen Antriebseinrichtung **320,** welche Antriebseinrichtung bzw. der Stellarm derart befestigt ist, dass eine vertikale Bewegung nicht ausgeführt werden kann, möglich ist, ist die dritte Verbindungsstelle **313** so eingerichtet, dass ein zumindest teilweises vertikales Verschieben des Kopplungselements **310** an dem Stellarm **321** möglich ist.

Ferner ist in **Fig. 2** zu sehen, dass das Kopplungselement **310** zur Verbindung mit der ersten optischen Baueinheit **100** bzw. mit dem Tragerahmen der ersten optischen Baueinheit **100** an der ersten Verbindungsstelle **311** eine Einstellschraube aufweist, welche kugelgelenksartig mit dem Tragerahmen verbunden ist. Diese Einstellschraube ist mit einem Gewinde in das Kopplungselement **310** eingeschraubt, wobei mittels der Einstellschraube manuell eine Feinjustierung vorgenommen werden kann, um die Ausrichtung bzw. die Winkelauslenkung der jeweiligen Tragerahmen zur Horizontalebene **H** genau einzustellen.

Es kann auch vorgesehen sein, dass auch andere Verbindungsstellen 312, **313** mittels einer Einstellschraube realisiert werden, mit welcher Feineinstellungen vorgenommen werden können.

**BEZUGSZEICHENLISTE**

| | |
|---|---|
| Beleuchtungsvorrichtung | 10 |
| Erste optische Baueinheit | 100 |
| Zweite optische Baueinheit | 200 |
| Kopplungselement | 310 |
| Erste Verbindungsstelle | 311 |
| Zweite Verbindungsstelle | 312 |
| Dritte Verbindungsstelle | 313 |
| Antriebseinrichtung | 320 |
| Stellarm | 321 |
| Horizontalebene | H |
| Erste Verschwenkachse | Y1 |
| Zweite Verschwenkachse | Y2 |
| Verschubachse | X1 |

## Patentansprüche

1. Beleuchtungsvorrichtung (10) für einen Kraftfahrzeugscheinwerfer, welche Beleuchtungsvorrichtung Folgendes umfasst:
- eine erste optische Baueinheit (100), welche um eine erste Verschwenkachse (Y1) verschwenkbar gelagert ist,
- eine zweite optische Baueinheit (200), welche um eine zweite Verschwenkachse (Y2) verschwenkbar gelagert ist, wobei die erste und die zweite Verschwenkachse (Y1, Y2) parallel zueinander verlaufen, und
- zumindest eine Einstelleinrichtung zum gleichzeitigen Verschwenken der ersten und der zweiten optischen Baueinheit (100, 200) um deren Verschwenkachsen (Y1, Y2), welche Einstelleinrichtung ein Kopplungselement (310) und eine Antriebseinrichtung (320) mit einem in eine Verschubachse (X1) linear verstellbaren Stellarm (321) umfasst, wobei die Verschubachse (X1) orthogonal zur ersten und zweiten Verschwenkachse (Y1, Y2) ist, und wobei das Kopplungselement (310) über eine erste Verbindungsstelle (311) gelenkig mit der ersten optischen Baueinheit (100) und über eine zweite Verbindungsstelle (312) gelenkig mit der zweiten optischen Baueinheit (200) verbunden ist, und wobei der Stellarm (321) der Antriebseinrichtung (320) mit dem Kopplungselement (310) an einer dritten Verbindungsstelle (313) beweglich verbunden ist und das Kopplungselement in Richtung der Verschubachse (X1) antreibt,
wobei die erste Verschwenkachse (Y1) in einer Horizontalebene (H) liegt, wenn die Beleuchtungsvorrichtung (10) in einem Scheinwerfer eingebaut ist, der sich in Einbaulage in einem Kraftfahrzeug befindet, und der Normalabstand
der ersten Verbindungsstelle (311) zu dieser Horizontalebene (H) von dem Normalabstand der dritten Verbindungsstelle (313) zur Horizontalebene (H) verschieden ist,
daurch gekennzeichnet, dass
das Kopplungselement (310) als längliches Kopplungselement (310) mit einer Längsachse ausgebildet ist,
wobei die Längsachse des Kopplungselements (310) durch die erste und zweite Verbindungsstellen (311, 312) verläuft und parallel zur Verschubachse (X1) ist, und
wobei
der Normalabstand der ersten Verbindungsstelle (311) zu der ersten Verschwenkachse (Y1) der ersten optischen Baueinheit (100) identisch zum Normalabstand der zweiten Verbindungsstelle (312) zu der zweiten Verschwenkachse (Y2) der zweiten optischen Baueinheit (200) ist.

2. Beleuchtungsvorrichtung nach Anspruch 1, **dadurch gekennzeichnet, dass** der Normalabstand der dritten Verbindungsstelle (313) zur Horizontalebene (H) kleiner ist als der Normalabstand der ersten Verbindungsstelle (311) zur Horizontalebene (H).

3. Beleuchtungsvorrichtung nach Anspruch 1 oder 2, **dadurch gekennzeichnet, dass** die Verschubachse (X1) parallel zur Horizontalebene (H) ist.

4. Beleuchtungsvorrichtung nach einem der Ansprüche 1 bis 3, **dadurch gekennzeichnet, dass** das Kopplungselement (310) starr ausgebildet ist.

5. Beleuchtungsvorrichtung nach einem der Ansprüche 1 bis 4, **dadurch gekennzeichnet, dass** die dritte Verbindungsstelle (313), welche den Stellarm (321) der Antriebseinrichtung (320) mit dem Kopplungselement (310) verbindet, an einem Ende des Kopplungselements (310) angeordnet ist.

6. Beleuchtungsvorrichtung nach einem der Ansprüche 1 bis 5, **dadurch gekennzeichnet, dass** die erste oder die zweite Verbindungsstelle (311, 312) an einem Ende des Kopplungselements (310), insbesondere an dem der dritten Verbindungsstelle (313) gegenüberliegenden Ende des Kopplungselements (310) angeordnet ist.

7. Beleuchtungsvorrichtung nach einem der Ansprüche 1 bis 6, **dadurch gekennzeichnet, dass** die erste und/oder die zweite Verbindungsstelle (311, 312) als Kugelgelenk bzw. kugelgelenksartig ausgebildet ist.

8. Beleuchtungsvorrichtung nach einem der Ansprüche 1 bis 7, **dadurch gekennzeichnet, dass** die erste und die zweite Verschwenkachse (Y1, Y2) gemeinsam in der Horizontalebene (H) liegen.

9. Beleuchtungsvorrichtung nach einem der Ansprüche 1 bis 8, **dadurch gekennzeichnet, dass** die optischen Baueinheiten (100, 200) Linsen, Reflektoren oder Lichtmodule sind.

10. Beleuchtungsvorrichtung nach einem der Ansprüche 1 bis 8, **dadurch gekennzeichnet, dass** die optischen Baueinheiten (100, 200) jeweils einen Tragerahmen aufweisen, an welchem die entsprechenden Verbindungsstellen (311, 312, 313) angeordnet sind.

11. Beleuchtungsvorrichtung nach einem der Ansprüche 1 bis 10, **dadurch gekennzeichnet, dass** die dritte Verbindungsstelle (313) ein zumindest teilweises vertikales Verschieben des Kopplungselements (310) an dem Stellarm (321) zulässt.

12. Kraftfahrzeugscheinwerfer mit zumindest einer Beleuchtungseinrichtung gemäß einem der Ansprüche 1 bis 11.

## Claims

1. Illumination device (10) for a motor vehicle headlamp, which illumination device comprises:
- a first optical assembly (100) which is pivotally mounted about a first pivot axis (Y1),
- a second optical assembly (200) which is mounted so as to be pivotable about a second pivot axis (Y2), the first and second pivot axes (Y1, Y2) running parallel to one another, and
- at least one adjusting device for simultaneous pivoting of the first and the second optical assembly (100, 200) about their pivot axes (Y1, Y2), which adjusting device comprises a coupling element (310) and a drive device (320) with an adjusting arm (321) linearly adjustable in a displacement axis (X1), the displacement axis (X1) being orthogonal to the first and second pivot axes (Y1, Y2) and wherein the coupling element (310) is pivotally connected to the first optical assembly (100) via a first connection point (311) and to the second optical assembly (200) via a second connection point (312), and wherein the actuating arm (321) of the drive device (320) is movably connected to the coupling element (310) at a third connection point (313) and drives the coupling element in the direction of the displacement axis (X1),
wherein
the first pivot axis (Y1) lies in a horizontal plane (H) when the lighting device (10) is installed in a headlamp which is in an installed position in a motor vehicle, and the normal distance of the first connection point (311) from this horizontal plane (H) is different from the normal distance of the third connection point (313) from the horizontal plane (H)
**characterized in that** the coupling element (310) is formed as an elongated coupling element (310) having a longitudinal axis, wherein the longitudinal axis of the coupling element (310) passes through the first and second connection points (311, 312) and is parallel to the displacement axis (X1), and wherein
the normal distance of the first connection point (311) to the first pivot axis (Y1) of the first optical assembly (100) is identical to the normal distance of the second connection point (312) to the second pivot axis (Y2) of the second optical assembly (200).

2. Illumination device according to claim 1, **characterized in that** the normal distance of the third connection point (313) to the horizontal plane (H) is smaller than the normal distance of the first connection point (311) to the horizontal plane (H).

3. Illumination device according to claim 1 or 2, **characterized in that** the displacement axis (X1) is parallel to the horizontal plane (H).

4. Illumination device according to one of the claims 1 to 3, **characterized in that** the coupling element (310) is rigid.

5. Illumination device according to any one of claims 1 to 4, **characterized in that** the third connection point (313), which connects the actuating arm (321) of the drive device (320) to the coupling element (310), is arranged at one end of the coupling element (310).

6. Illumination device according to one of claims 1 to 5, **characterized in that** the first or the second connection point (311, 312) is arranged at one end of the coupling element (310), in particular at the end of the coupling element (310) opposite the third connection point (313).

7. Illumination device according to one of claims 1 to 6, **characterized in that** the first and/or the second connection point (311, 312) is designed as a ball joint or ball joint-like.

8. Illumination device according to one of claims 1 to 7, **characterized in that** the first and the second swivel axis (Y1, Y2) lie together in the horizontal plane (H).

9. Illumination device according to one of claims 1 to 8, **characterized in that** the optical assemblies (100, 200) are lenses, reflectors or light modules.

10. Illumination device according to one of claims 1 to 8, **characterized in that** the optical units (100, 200) each have a supporting frame on which the corresponding connection points (311, 312, 313) are arranged.

11. Illumination device according to any one of claims 1 to 10, **characterized in that** the third connection point (313) allows at least partial vertical displacement of the coupling element (310) on the adjusting arm (321).

12. Motor vehicle headlamp comprising at least one lighting device according to any one of claims 1 to 11.

## Revendications

1. Dispositif d'éclairage (10) pour un projecteur de véhicule automobile, lequel dispositif d'éclairage comprend :
- une première unité de construction optique (100), qui est logée de manière à pouvoir pivoter autour d'un premier axe de pivotement (Y1),
- une deuxième unité de construction optique (200), qui est logée de manière à pouvoir pivoter autour d'un deuxième axe de pivotement (Y2), le premier et le deuxième axe de pivotement (Y1, Y2) étant parallèles entre eux, et
- au moins un dispositif de réglage pour le pivotement simultané du premier et du deuxième module optique (100, 200) autour de leurs axes de pivotement (Y1, Y2), lequel dispositif de réglage comprend un élément de couplage (310) et un dispositif d'entraînement (320) avec un bras de réglage (321) réglable linéairement dans un axe de déplacement (X1), l'axe de déplacement (X1) étant orthogonal au premier et au deuxième axe de pivotement (Y1, Y2), et l'élément de couplage (310) étant relié de manière articulée au premier module optique (100) par l'intermédiaire d'un premier point de liaison (311) et au deuxième module optique (200) par l'intermédiaire d'un deuxième point de liaison (312), et le bras de réglage (321) du dispositif d'entraînement (320) étant relié de manière mobile à l'élément de couplage (310) en un troisième point de liaison (313) et entraînant l'élément de couplage dans la direction de l'axe de déplacement (X1),
où
le premier axe de pivotement (Y1) se trouve dans un plan horizontal (H) lorsque le dispositif d'éclairage (10) est monté dans un projecteur qui se trouve en position de montage dans un véhicule automobile, et la distance normale du premier point de liaison (311) à ce plan horizontal (H) est différente de la distance normale du troisième point de liaison (313) au plan horizontal (H),
**caractérisé en ce que** l'élément de couplage (310) est réalisé sous la forme d'un élément de couplage allongé (310) avec un axe longitudinal, l'axe longitudinal de l'élément de couplage (310) s'étendant à travers les premier et deuxième points de liaison (311, 312) et étant parallèle à l'axe de poussée (X1), et où
la distance normale du premier point de connexion (311) au premier axe de pivotement (Y1) du premier ensemble optique (100) est identique à la distance normale du deuxième point de connexion (312) au deuxième axe de pivotement (Y2) du deuxième ensemble optique (200).

2. Dispositif d'éclairage selon la revendication 1, **caractérisé en ce que** la distance normale du troisième point de jonction (313) au plan horizontal (H) est inférieure à la distance normale du premier point de jonction (311) au plan horizontal (H).

3. Dispositif d'éclairage selon la revendication 1 ou 2, **caractérisé en ce que** l'axe de déplacement (X1) est parallèle au plan horizontal (H).

4. Dispositif d'éclairage selon l'une des revendications 1 à 3, **caractérisé en ce que** l'élément de couplage (310) est rigide.

5. Dispositif d'éclairage selon l'une des revendications 1 à 4, **caractérisé en ce que** le troisième point de connexion (313) reliant le bras de commande (321) du dispositif d'entraînement (320) à l'élément de couplage (310) est situé à une extrémité de l'élément de couplage (310).

6. Dispositif d'éclairage selon l'une des revendications 1 à 5, **caractérisé en ce que** le premier ou le deuxième point de connexion (311, 312) est disposé à une extrémité de l'élément de couplage (310), notamment à l'extrémité de l'élément de couplage (310) opposée au troisième point de connexion (313).

7. Dispositif d'éclairage selon l'une des revendications 1 à 6, **caractérisé en ce que** le premier et/ou le deuxième point de connexion (311, 312) sont réalisés sous la forme d'une rotule ou d'une articulation à rotule.

8. Dispositif d'éclairage selon l'une des revendications 1 à 7, **caractérisé en ce que** le premier et le deuxième axe de pivotement (Y1, Y2) sont situés conjointement dans le plan horizontal (H).

9. Dispositif d'éclairage selon l'une des revendications 1 à 8, **caractérisé en ce que** les ensembles optiques (100, 200) sont des lentilles, des réflecteurs ou des modules d'éclairage.

10. Dispositif d'éclairage selon l'une des revendications 1 à 8, **caractérisé en ce que** les unités optiques (100, 200) présentent chacune un cadre de support sur lequel sont disposés les points de liaison (311, 312, 313) correspondants.

11. Dispositif d'éclairage selon l'une des revendications 1 à 10, **caractérisé en ce que** le troisième point de connexion (313) autorise un déplacement vertical au moins partiel de l'élément de couplage (310) sur le bras de réglage (321).

12. Projecteur de véhicule automobile comportant au moins un dispositif d'éclairage selon l'une des revendications 1 à 11.
